# FASCICULE DE BREVET EUROPEEN

(11) **EP 4 241 137 B1**
(45) Date de publication et mention de la délivrance du brevet: **11.06.2025**
(21) Numéro de dépôt: 21802333.1
(22) Date de dépôt: 01.11.2021
(51) Int. Cl.: G04D 3/00, B23K 26/042, B23K 26/03, B23K 26/0622, B23K 26/067, B23K 26/08, B23K 26/382, B23K 26/40, B23K 26/402, B23K 37/04, B23K 103/00, B23K 103/04, B23K 103/08, B23K 103/14

(54) **PROCEDE ET SYSTEME D'USINAGE DE PIECES MICROTECHNIQUES**
VERFAHREN UND ANLAGE ZUR BEARBEITUNG VON WERKSTÜCKEN DER MIKROTECHNIK
METHOD AND SYSTEM FOR MACHINING MICROTECHNOLOGY WORKPIECES

(30) Priorité: 03.11.2020 EP 20205523
(43) Date de publication de la demande: 13.09.2023
(73) Titulaire: Pierhor-Gasser SA, 1024 Ecublens VD (CH)
(72) Inventeur: JACOT, Philippe, 2022 Bevaix (CH); LAMBERT, Fabrice, 1175 Lavigny (CH)
(74) Mandataire: Bovard SA Neuchâtel
(86) Numéro de dépôt international: PCT/EP2021/080284
(87) Numéro de publication internationale: WO 2022/096419

(56) Documents cités:
- CN-A- 107 745 188
- FR-A1- 2 995 413
- MARTIN PAUL ETIENNE ET AL: "High-power femtosecond laser cutting and drilling combining beam-shaping and beam-splitting", PROCEEDINGS OF SPIE; [PROCEEDINGS OF SPIE; ISSN 0277-786X; VOL. 8615], SPIE, 1000 20TH ST. BELLINGHAM WA 98225-6705 USA, vol. 10744, 14 September 2018 (2018-09-14), pages 107440U - 107440U, XP060112070, ISBN: 978-1-5106-2099-5, DOI: 10.1117/12.2322106
- HOLTKAMP JENS ET AL: "Innovative beam forming concepts", 4 November 2015 (2015-11-04), pages 1 - 18, XP055884053, Retrieved from the Internet <URL:https://swissphotonics.net/libraries.files/holtkamp> [retrieved on 20220126]

## Description

### Domaine de l'invention

L'invention concerne le domaine général de la microtechnique et notamment l'usinage de pièces par gravure avec un laser. L'invention concerne plus particulièrement une méthode et un système d'usinage de petites pièces de matériaux durs à l'aide d'un laser à très courtes impulsions, plus particulièrement par un laser femtoseconde.

Le système d'usinage trouve une application particulière dans l'industrie horlogère, notamment pour la réalisation de pièces de montres. On peut également citer des applications dans les domaines de la fluidique (buses) et médicales (paliers, isolateurs).

### Etat de la technique

L'utilisation de pièces réalisées dans des matériaux très durs comme le diamant, le saphir, le corindon ou des céramiques est connue dans divers domaines tels que les applications médicales ou l'horlogerie.

Les techniques d'usinage traditionnelles sont surtout limitées aux techniques d'usinage ou façonnage à l'aide d'abrasifs ou des techniques de chimie ou par traitement plasma.

Par exemple, l'usinage de trous de forme arrondie dans des pièces de saphir pour l'horlogerie est réalisé par de multiples passages d'un fil abrasif et ce procédé est réalisé essentiellement manuellement ce qui mène à un processus long et coûteux. Aussi, la précision de la forme des ouvertures dépendra de l'expérience de l'opérateur(-trice) et est donc sujette à des variations ce qui pour certaines applications peut être inacceptable.

Le document FR2995413A1 décrit un procédé de fabrication de petites pièces dures par découpe laser d'une plaquette en matériau cristallin.

### Objet de l'invention

L'invention concerne une méthode d'usinage par laser d'un grand nombre de petites pièces en matériaux durs. En particulier la méthode permet de réaliser des surfaces de révolution et des ouvertures dans une pluralité de pièces apportées et arrangées sur un substrat qui peut être n'importe quel support.

Le système et la méthode permettent d'usiner extrêmement rapidement et de manière fiable par usinage laser des surfaces concaves ou convexes et des trous dans des pièces de petites tailles et dans des matériaux durs, comme le diamant, le corindon et les céramiques.

Le système et le procédé de l'invention permettent d'utiliser les machines d'usinage par laser femtoseconde, qui sont des machines extrêmement couteuses, au maximum de leur capacité. Ceci est clé dans le domaine de la fabrication de pierres d'horlogerie mais également des pièces médicales de précision tels qu'utilisées par exemple dans des endoscopes. Une application particulière vise la réalisation de surfaces courbées et des trous et ouvertures dans des pièces d'horlogerie en Al₂O₃.

Dans un premier aspect, l'invention concerne un équipement d'usinage de pièces dures de microtechnique, comprenant une machine d'usinage comprenant un système de chargement/déchargement de supports de pièces dures et au moins un système laser comprenant au moins un laser pour usiner lesdites pièces dures et un système de pilotage dudit laser. Ladite machine d'usinage définit un plan horizontal X-Y et un axe vertical Z orthogonal au plan horizontal X-Y.

Chaque support comprend, au moins sur un côté, une surface agencée pour y fixer une pluralité de pièces dures.

L'équipement comprend un dispositif de mesure de la position X-Y-Z de chaque pièce dure d'au moins un ensemble de pièces dures par rapport à un repère de référence et des moyens d'enregistrement desdites positions X-Y-Z agencés pour coopérer avec le système de pilotage du laser.

Le système de pilotage du laser comprend un système de positionnement dudit laser agencé pour, avant l'usinage de chaque pièce dure, déplacer et positionner le laser par rapport à ladite pièce dure à usiner en fonction de la position X-Y-Z enregistrée de ladite pièce dure de manière à pouvoir usiner ladite pièce dure.

La présente invention concerne également un procédé d'usinage de pièces dures de microtechnique. Le procédé comprend les étapes (A-F) suivantes :
A : se munir de l'équipement d'usinage comme décrit ci-dessus et se munir d'une pluralité de pièces dures de microtechnique à usiner;
B : se munir d'au moins un support de pièces et fixer sur ledit support de pièces ladite pluralité desdites pièces dures;
C : insérer au moins un des dits support de pièces dans ladite machine à usiner;
D : mesurer la position X-Y-Z de chacune desdites pièces dures d'au moins un ensemble de pièces dures fixées sur le support de pièces par rapport audit repère de référence, au moyen dudit dispositif de mesure et enregistrer les positions X-Y-Z mesurées au moyen desdits moyens d'enregistrement ;
E : exécuter des étapes d'usinages préprogrammés desdites pièces dures d'au moins dudit ensemble par ledit au moins un laser, ledit laser étant, avant l'usinage de chaque pièce dure dudit ensemble, déplacé et positionné par rapport à ladite pièce dure à usiner en fonction de la position X-Y Z de ladite pièce dure mesurée et enregistrée à l'étape D ;
F: libérer au moins une desdites pièces dures de son support.

Un tel équipement d'usinage et procédé permettent entre autre l'usinage de trous dans des pièces dures de microtechnique et assurer que les trous soient parfaitement positionnés, parfaitement par exemple centrés par rapport à leur circonférence. Le laser est de type femtoseconde. Un avantage de la machine est qu'elle est adaptée pour usiner au moins 5000 pièces en moins de 10000 secondes.

### Descriptifs des figures

L'invention sera mieux comprise à la lecture de la description détaillée d'un exemple de réalisation faite en référence aux figures annexées parmi lesquelles :
- La Figure 1a et 1b représentent des étapes du procédé d'usinage selon l'invention;
- La Figure 2 représente un trou réalisé dans une pièce dure ;
- La Figure 3 représente un équipement d'usinage comprenant une machine d'usinage comprenant un système de chargement/déchargement de pièces, ainsi qu'un système de test de pièces dures;
- La Figure 4 représente l'arrangement d'une pluralité de pièces dures sur un support, typiquement une plaquette semiconducteur ;
- La Figure 5 représente un support, typiquement une plaquette semiconducteur, comprenant deux ensembles de pièces dures de type différents ;
- La Figure 6 représente un agencement de pièces dures avant leur usinage par laser selon le procédé de l'invention ;
- La Figure 7 représente une partie d'un équipement d'usinage comprenant un laser et un système de vision;
- La Figure 8 représente un agencement de pièces posées sur un support avant leur usinage par laser selon le procédé de l'invention ;
- La Figure 9 représente un système de vision pour mesurer la position 3D d'un ensemble de pièces dures;
- La Figure 10 représente un système de mesures optiques de pièces dures comprenant le système de vision de la Figure 9. Le système de mesure optique peut être positionné hors la machine d'usinage illustrée dans la Figure 7 ;
- La Figure 11 représente l'usinage de deux pièces dures par deux faisceaux lasers différents ;
- La Figure 12 représente un système de chargement de pièces ;

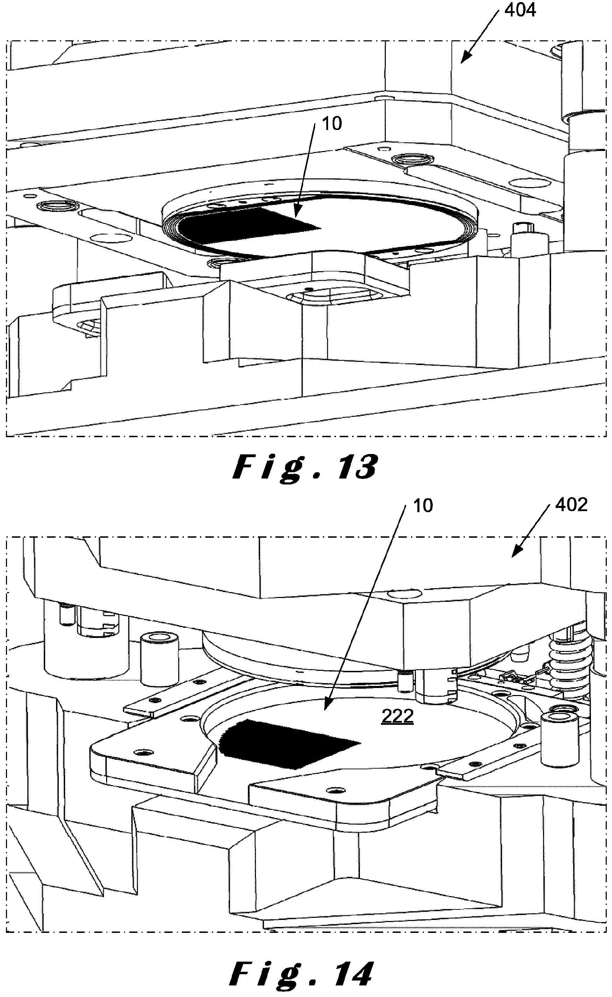

- La Figure 13 représente un système d'aspiration du système de chargement de pièces de la Figure 10 ;
- La Figure 14 représente un système de pose de pièces du système de chargement de pièces de la Figure 10 ;
- La Figure 15 représente l'usinage par laser du bombé d'une pièce d'horlogerie ;
- La Figure 16 représente l'usinage par laser d'une creusure d'une pièce d'horlogerie.

### Description de modes de réalisation de l'invention

L'invention concerne une méthode d'usinage de petites pièces 1 en matériaux durs. En particulier la méthode permet de réaliser des surfaces de révolution et/ou des ouvertures dans une pluralité 10,12 de pièces dures 1 apportées et arrangées sur un substrat qui peut être n'importe quel type de support 100.

Bien qu'une application privilégiée de l'invention concerne le domaine de l'horlogerie, elle n'est pas limitée à ce domaine et peut s'appliquer à tout domaine qui bénéficie de petites pièces dures qui présentent des ouvertures et /ou des surfaces usinées telles que des surfaces courbées ou des surfaces définies par un polygone dans au moins une section de ladite pièce dure 1.

Par exemple, les dimensions des pierres rubis utilisées dans les mécanismes horlogers sont de très petites tailles et il est très difficile de les usiner avec précision et à des faibles coûts et à haute vitesse. Le diamètre extérieur de ces pièces est typiquement entre 0.5 et 3 mm, l'épaisseur est entre 0.05 mm et 1 mm.

Il est ainsi très délicat de charger et décharger les pierres de façon très rapide dans une machine d'usinage afin d'assurer la cadence permise par l'usinage. Les méthodes standards utilisent des chargements par bols vibrants ou par systèmes d'alimentation flexibles guidés par vision qui chargent directement les pierres dans des posages à serrage, ce qui permet un positionnement parfait de la pierre avant l'usinage. Ces méthodes sont très difficiles à mettre au point pour atteindre des niveaux de fiabilité et d'autonomie élevés. De plus elles sont incapables d'atteindre des cadences de chargement/déchargement très élevées (on parle de cadences entre 0.5 secondes et 1 seconde par pièce).

Par contre, l'usinage de la surface et/ou trou interne par laser femtoseconde est très rapide, et l'usinage peut se faire en environ 0.5 à 1.5 secondes suivant les dimensions des ouvertures à réaliser. Des diamètres typiques d'ouvertures sont entre 0.05 mm et 2 mm.

Dans un premier aspect, l'invention concerne un équipement d'usinage 1000 de pièces dures 1 de microtechnique. L'équipement d'usinage 1000 comprend une machine d'usinage 200, comprenant un système de chargement/déchargement 220 de supports 100 de pièces dures 1, et au moins un système laser comprenant au moins un laser 204 pour usiner lesdites pièces dures 1 et un système de pilotage dudit laser 204. Ladite machine 200 définit un plan horizontal X-Y et un axe vertical Z orthogonal au plan horizontal X-Y.

Chaque support 100 comprend, au moins sur un côté, une surface agencée pour y fixer une pluralité de pièces dures 1. De préférence ledit support est un support percé avec des ouvertures prévues à chaque position destinée à positionner une pièce dure 1.

L'équipement d'usinage 1000 comprend un dispositif de mesure de la position X-Y-Z de chaque pièce dure 1 d'au moins un ensemble de pièces dures 1 par rapport à un repère de référence et des moyens d'enregistrement desdites positions X-Y-Z agencés pour coopérer avec le système de pilotage du laser 204.

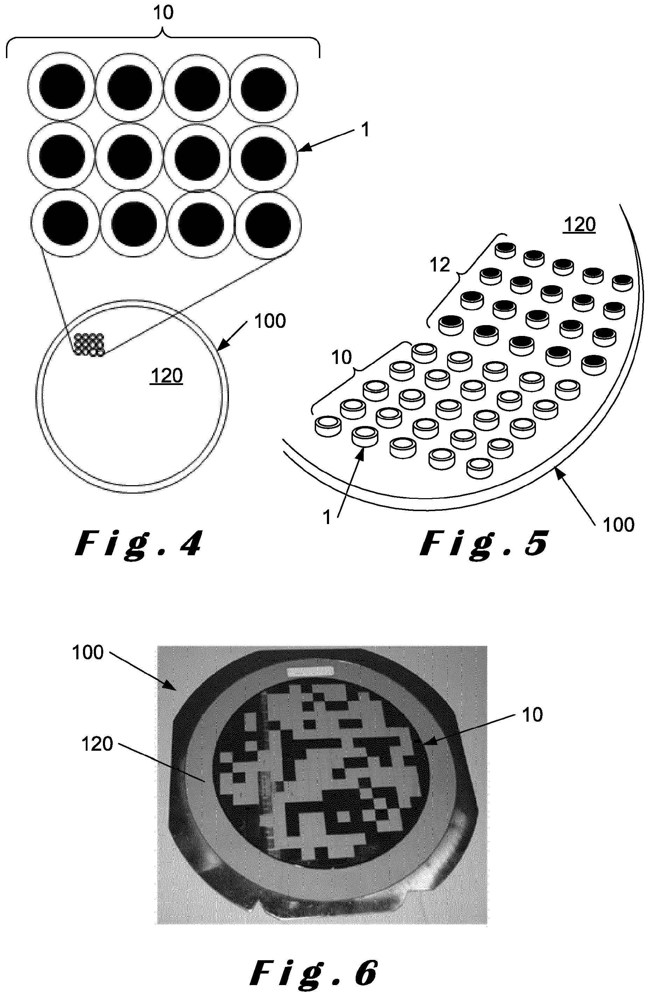

L'équipement d'usinage 1000 comprend une table de positionnement 208 agencée pour accueillir un support de pièces 100 tel qu'illustré en Figures 4, 5, 6. La figure 6 illustre un posage de pièces dures 1 réalisées en silicium avec un revêtement de SiO₂ Dans l'exemple de la Figure 6, les pièces dures d'un ensemble de pièces dures, illustrées en noir dans la Figure 6, sont placées chacune à une précision de position en X-Y, relative à un repère sur leur support 100, d'environ 20 µm. Cette précision n'est pas assez précise pour procéder à un usinage précis. C'est pour cela que l'équipement d'usinage comprend un système de mesure de position précise, en X-Y-Z, des pièces dures, et cela à une précision qui est préférablement mieux que 2 µm, préférablement mieux que 1µm.

Le système de pilotage du laser comprend un système de positionnement dudit laser 204 agencé pour, avant l'usinage de chaque pièce dure 1, déplacer et positionner le laser 204 par rapport à ladite pièce dure 1 à usiner en fonction de la position X-Y-Z enregistrée de ladite pièce dure 1, de manière à pouvoir usiner ladite pièce dure 1.

Dans un mode de réalisation, l'équipement est agencé pour piloter l'usinage de trous dans chaque pièce dure 1 et assurer que les trous soient parfaitement positionnés, par exemple centrés précisément par rapport à leur circonférence.

Ledit au moins un laser 204 est un laser femtoseconde. Un laser femtoseconde est un type de laser particulier qui produit des impulsions ultra-courtes dont la durée est de l'ordre de quelques femtosecondes à quelques centaines de femtosecondes soit de l'ordre de grandeur de la période d'une onde électromagnétique du visible

Avantageusement la source laser délivre de la lumière à des longueurs d'onde de 1030 nm, 515 nm ou 343 nm.

Les durées d'impulsion typiques sont préférablement entre 200 fs et 10 ps.

L'énergie maximale par pulse est avantageusement proche de 2 mJ.

Pour des pièces dures, tels que réalisé en Al₂O₃, la puissance du laser est typiquement de 20 W, mais sera adaptée en fonction du matériau des pièces dures1.

Avantageusement, la focalisation et les mouvements 3D du faisceau sont réalisés par un bloc optique, par exemple un bloc optique qui peut comprendre un système d'adaptation de la forme du faisceau laser et une orientation de 3, 4 ou 5 axes dans l'espace. Par exemple, la focalisation du faisceau laser peut être adaptée pendant l'opération d'usinage des pièces dures 1.

Avantageusement, le dispositif de mesure de la position peut comprendre un système de vision 206. Un tel système de mesure, pas illustré dans les Figures, peut permettre de déterminer un paramètre géométrique des pièces dures 1, tel que leurs dimensions 2D ou 3D.

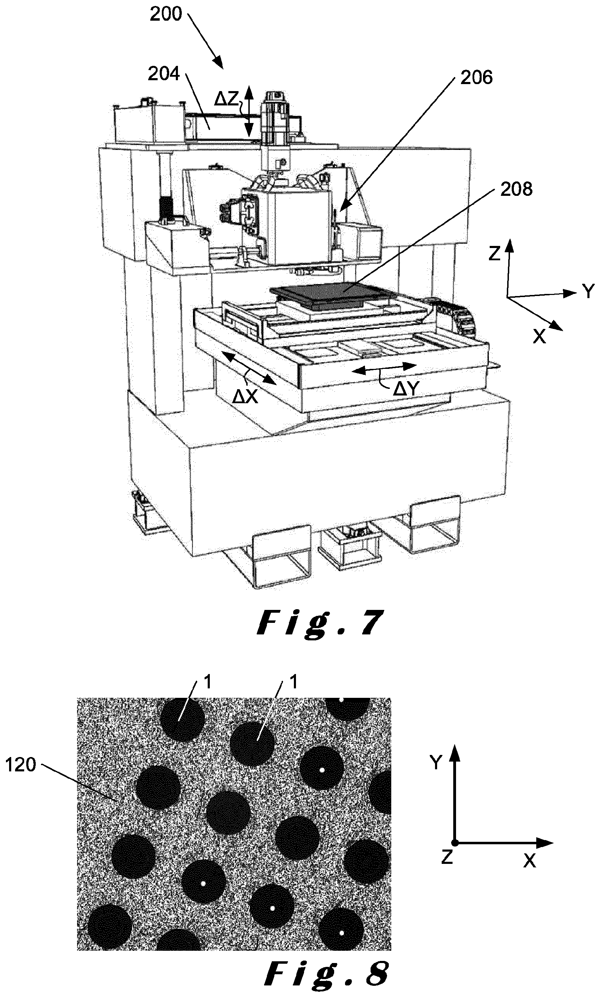

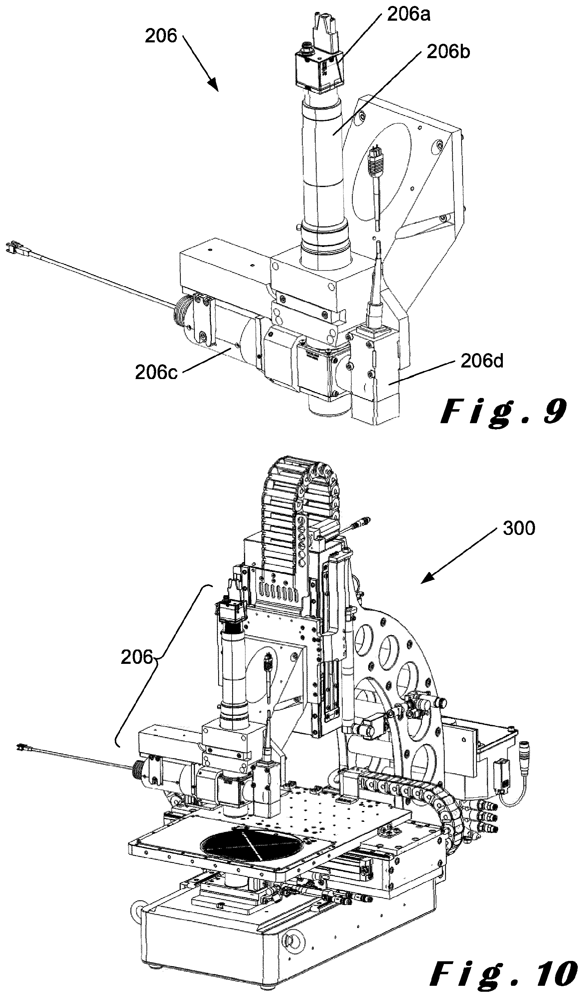

Dans un mode de réalisation, illustré en Figure 7, le dispositif de mesure de la position est intégré dans la machine d'usinage 200. Le dispositif de mesure de la position X-Y-Z des pièces dures 1 comprend un système optique 206 qui est préférablement fixé audit laser 204, comme illustré dans la Figure 7. La figure 9 illustre un exemple de réalisation d'un tel système optique 206 comprenant un détecteur 206a, un système de visualisation 206b adapté pour former des images dans un plan horizontal X-Y et un système d'illumination 206c. Le système de mesure de position X-Y-Z comprend un système pour déterminer la position verticale Z des pièces dures 1. Avantageusement un tel système de mesure de la position verticale est un système optique 206d comprenant un système dynamique de focalisation dans la direction verticale Z. Il est entendu que le système de visualisation en 2D peut être agencé afin de faire des mesures 2D selon différentes positions verticales prédéterminées. Par exemple, différentes images 2D peuvent être prises pour différentes positions Z. Le système peut être adapté aussi afin d'assurer des images 2D pour une certaine position verticale. Par exemple, le système de vision peut être déplacé en direction verticale de telle façon à visualiser une surface prédéterminée, par exemple la face supérieure 1a ou la face arrière 1b des pièces. Ceci permet d'augmenter la précision de la mesure 3D X-Y-Z des pièces dures 1.

Dans une variante avantageuse, le repère de référence est au moins une marque d'alignement réalisée sur une surface dudit support 100 de pièces dures 1. Le repère de référence peut par exemple être constitué d'un ou plusieurs motifs d'alignement, par exemple des motifs en forme de croix.

Dans une variante, le repère de référence est au moins une marque d'alignement réalisée sur un cadre d'un système d'accueil et de translation dudit support 100.

D'une manière avantageuse, le dispositif de mesure de la position X-Y-Z est agencé pour réaliser une mesure avec une précision inférieure à 20 µm, de préférence 10 µm, plus préférentiellement 5 µm, et préférablement inférieure à 2 µm, dans les 3 axes X, Y, Z.

Dans un mode de réalisation, l'équipement d'usinage 1000 comprend des moyens de traitement des positions X-Y-Z enregistrées des pièces dures 1 d'au moins deux ensembles de pièces dures 1, lesdits ensembles pouvant avoir des pièces dures 1 en commun, les moyens de traitement étant agencés pour obtenir un enregistrement reconstituant la position X-Y-Z des pièces dures 1 desdits au moins 2 ensembles réunis, et de préférence de toutes les pièces dures 1 fixées sur ledit support 100.

Dans des variantes, le système de mesure de position X-Y-Z peut être agencé avec la machine d'usinage mais peut être séparé de la partie usinage. Une mesure en ligne permet d'avoir un temps minimum entre la mesure des positions des pierres et l'utilisation de ces mesures pour l'usinage

Dans des variantes, ledit ensemble de pièces dures 1 est constitué de pièces dures 1 de même type ou de type différent.

Dans un mode de réalisation, le support 100 est agencé pour fixer au moins deux ensembles contenant des pièces dures 1 de types différents. La figure 5 par exemple illustre un support 100 sur lequel deux types d'ensembles de pièces 10, 12 sont fixés avant leur usinage.

Dans un mode de réalisation, le système de chargement/déchargement 220 comprend au moins une cassette mobile 220a, 220b, 220c, 220d, 220e, 220f, 220g, 220h, 220i pour contenir chacune au moins un desdits supports 100 . Dans une exécution préférée, chacune des cassettes mobiles 220a, 220b, 220c, 220d, 220e, 220f, 220g, 220h, 220i peut contenir au moins 20 supports 100.

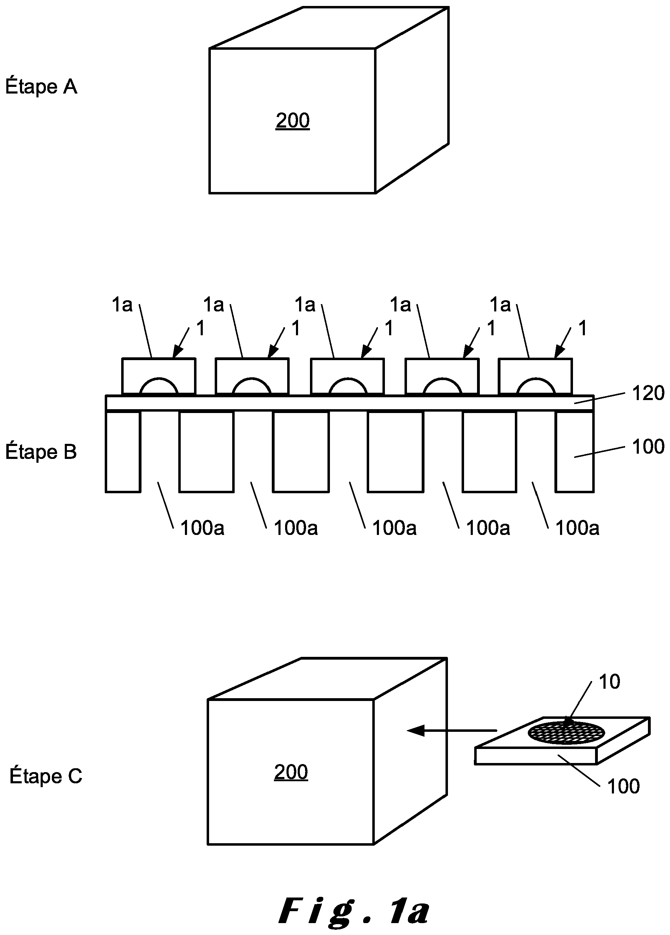

Lesdites casettes mobiles 220a-220i comprennent, de préférence, des cadres associés à un système de transfert agencé pour translater les supports depuis le système de chargement/déchargement 220 vers la machine d'usinage 200, comme illustré schématiquement dans la Figure 1a.

Dans un mode de réalisation, pas illustré dans les Figures, la machine d'usinage 200 comprend un système pour libérer, après leur usinage, au moins une partie des pièces dures 1 de leur support 100.

Dans un mode de réalisation, ledit système de positionnement comprend un système optique 5 axes agencé pour coopérer avec le système de pilotage dudit laser 204, pour pouvoir orienter le faisceau laser 210 émis dans les 3 dimensions X-Y-Z.

D'une manière particulièrement avantageuse, la machine d'usinage 200 comprend un programme d'usinage pour usiner un nombre prédéterminé de ladite pluralité de pièces dures 1. Dans des variantes par exemple le programme d'usinage peut rendre possible l'usinage de deux ensembles 10, 12 de pièces dures par deux lasers différents de la machine d'usinage 200 ou peut permettre d'usiner deux ensembles 10, 12 de pièces par deux modes d'opération différents du laser. Ces modes d'opérations différents peuvent consister dans l'utilisation d'énergies ou de puissances différentes, et/ou par un ajustement de l'ouverture numérique du faisceau laser.

Dans une variante d'exécution, la machine d'usinage 200 comprend un programme d'usinage pour usiner au moins une portion des pièces dures 1 selon différentes étapes d'usinage. Par exemple, chaque pièce peut être traitée par la réalisation d'un trou, suivi par une opération de traitement d'un bord ou d'une circonférence de la pièce dure 1.

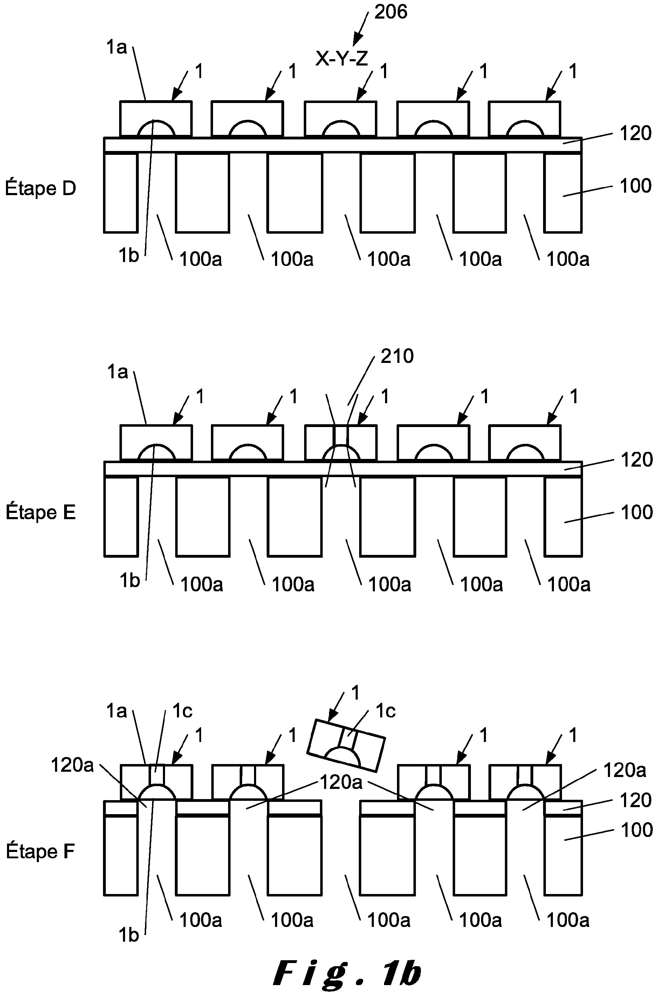

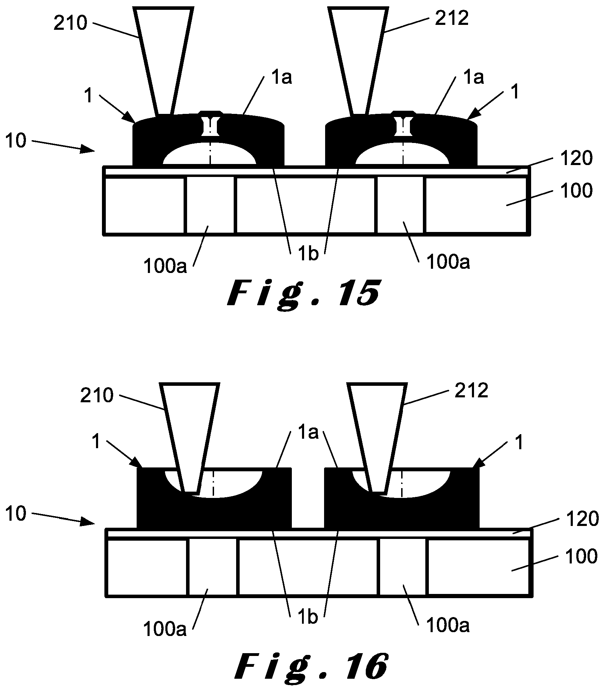

De préférence, le support 100 est une plaquette en matériau semiconducteur, en matériau céramique, en alliage métallique ou en verre. Afin de permettre de mieux tenir les pièces dures 1, ledit support 100 est préférablement un support percé, avantageusement avec des ouvertures 100a prévus à l'emplacement de la pose des pièces dures 1, comme illustré dans les figures 1b, 11, 15, 16.

Avantageusement, chaque support 100 peut être agencé pour recevoir plus de 100, de préférence plus de 500, de préférence plus de 1000, préférablement plus de 5000 pièces dures 1. Dans une réalisation pratique, le support 100 peut recevoir plus de 8000 pièces dures 1.

Préférablement, la machine 200 est adaptée pour usiner au moins 5000 pièces en moins de 10000 secondes.

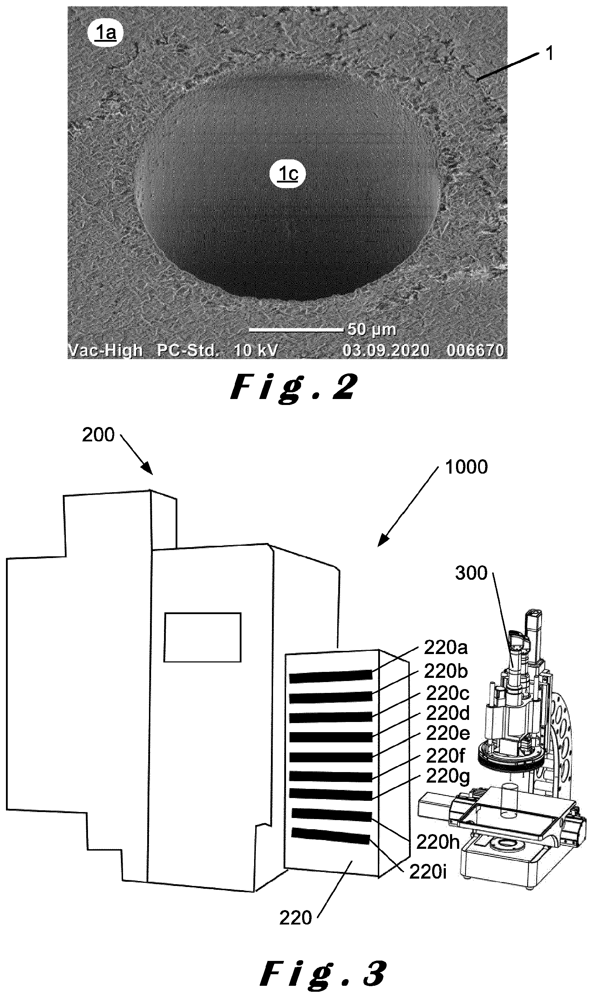

Avantageusement, tel qu'illustré en Figure 3, l'équipement d'usinage 1000 peut comprendre un système de mesure 300 pour mesurer la position X-Y-Z des pièces dures 1. Ce système 300 peut également être adapté pour mesurer la géométrie 2D et/ou 3D des pièces dures 1.

Il est compris que ledit système de vision 206 peut être adapté pour visualiser et déterminer des géométries des pièces dures usinées, par exemple pendant ou après le cycle d'usinage.

Dans un mode de réalisation, la machine d'usinage de l'invention 200 peut comprendre au moins deux lasers qui produisent des faisceaux non parallèles. Par exemple, un premier laser femtoseconde peut être adapté pour réaliser des ouvertures et un autre laser peut être utilisé pour produire un faisceau qui n'est pas parallèle au faisceau du premier laser.

Avantageusement , la machine d'usinage de l'invention peut comprendre au moins une optique multifaisceaux, adaptée pour réaliser des usinages simultanés de plusieurs pièces en même temps.

L'invention concerne aussi un procédé d'usinage de pièces de microtechnique en matériau dur comprenant les différentes étapes (A-F) consistant à :
A : se munir de l'équipement d'usinage comme décrit ci-dessus et se munir d'une pluralité de pièces dures de microtechnique 1 à usiner;
B : se munir d'au moins un support de pièces 100 et fixer sur ledit support de pièces 100 ladite pluralité desdites pièces dures 1;
C : insérer au moins un des dits support de pièces 100 dans ladite machine à usiner 200;
D : mesurer la position X-Y-Z de chacune desdites pièces dures 1 d'au moins un ensemble de pièces dures 1 fixées sur le support de pièces 100 par rapport audit repère de référence, au moyen dudit dispositif de mesure et enregistrer les positions X-Y-Z mesurées au moyen desdits moyens d'enregistrement ;
E : exécuter des étapes d'usinages préprogrammées desdites pièces dures 1 d'au moins dudit ensemble par ledit au moins un laser 204, ledit laser 204 étant, avant l'usinage de chaque pièce dure 1 dudit ensemble, déplacé et positionné par rapport à ladite pièce dure 1 à usiner en fonction de la position X-Y Z de ladite pièce dure 1 mesurée et enregistrée à l'étape D ;
F: libérer au moins une desdites pièces dures 1 de son support 100.

Une fois les pièces 1 chargées et référencées sur la table X-Y-Z de la machine d'usinage 200, la cadence d'usinage des pièces 1 agencées sur un support 100 est dictée par le temps d'usinage, par exemple par le temps d'usinage du trou - typiquement 0.5 à 1.5 sec - plus le temps de déplacement de la table d'une pierre 1 à l'autre. Le temps d'usinage est typiquement 0.3 à 1 seconde suivant la taille et l'écart entre chaque pierre. Pour des pierres de 0.9 mm de diamètre extérieur, plus de 8'000 pierres peuvent être arrangées sur un support rond de 150 mm de diamètre. Le chargement et déchargement des supports est extrêmement aisé, et même s'il n'est pas rapide, le temps est divisé par le nombre de pierres par support 100. Un système de chargement automatique de supports permet de faire fonctionner la machine d'usinage de façon complètement autonome pendant de très longues périodes, malgré un temps de cycle d'usinage des pièces qui est typiquement d'environ 1 seconde.

Préférablement, la mesure de la position X-Y-Z de chaque pièce dure 1 se fait par un système de vision 206. Le système de vision peut être fixé sur une surface interne de la machine d'usinage, mais de préférence, la mesure de la position X-Y-Z de chaque pièce se fait par un système optique qui est fixé audit laser 204, tel qu'illustré en Figure 7.

Dans une alternative, la position X-Y-Z des pièces est mesurée sur un système de test 300 qui peut déterminer au moins la position X-Y des pièces dures relative à un repère du support de pièces. Il suffit alors de positionner ce support de pièces précisément sur la table de positionnement 208 de la machine afin de connaitre la position précise des pièces vis-à-vis du système qui comprend le laser d'usinage 204.

Bien entendu une deuxième série de mesures X-Y-Z peut être faite additionnellement dans la machine d'usinage 200, après la pose du support et les pièces dures dont au moins la position X-Y des pièces dures 1 est connue relativement à un repère du support. Ceci permet d'augmenter la précision de la mesure X-Y-Z relativement au système qui comprend le laser 204.

D'une manière particulièrement avantageuse, la mesure de la position des pièces dures 1, selon l'étape D de la mesure de position X-Y-Z, comprend les mesures successives de la position des pièces d'au moins 2 ensembles par rapport à un même repère de référence, lesdits ensembles pouvant avoir des pièces dures 1 en commun, lesdites mesures successives pouvant se recouvrir partiellement, et le traitement desdites mesures successives par les moyens de traitement de l'équipement d'usinage pour obtenir un enregistrement reconstituant la position X-Y-Z des pièces dures 1 desdits au moins 2 ensembles réunis, et de préférence de toutes les pièces dures 1 fixées sur ledit support 100.

Dans un exemple typique, le système de vision procède par la prise de vue de chacune des pièces dures individuellement. Dans un exemple avantageux, afin de reconstituer la position X-Y-Z de toutes les pièces dures 1, le système de vision procède par la prise de vue successive de 10 à 15 pièces dures, tel qu'illustré dans la Figure 8.

L'ensemble de pièces dures 1 peut être constitué de pièces dures 1 de même type ou de type différent. Selon le type de pièces à usiner le procédé de l'usinage peut être adapté.

Dans une variante du procédé, lors de l'étape E, le positionnement du laser 204, relativement auxdites pièces dures 1, se fait par un déplacement dans un plan X-Y ou dans l'espace X-Y-Z dudit laser 204.

Dans une autre variante, lors de l'étape E, le positionnement du laser 204 relativement auxdites pièces dures 1 se fait par un déplacement dudit support de pièces 100.

Il est aussi possible que, lors de l'étape E, le positionnement du laser 204 se fasse par un déplacement dudit laser 204 et aussi dudit support de pièces 100. Ces deux déplacements ne doivent pas forcément être simultanés.

Dans un mode de réalisation, l'étape D de mesure de la position des pièces dures 1 est réalisée successivement pour toutes les pièces dures 1 juste avant leur usinage.

Dans un mode de réalisation, l'étape B de fixation des pièces dures 1 est réalisée au moyen d'un chargeur de pièces 400 coopérant avec le système de chargement/déchargement 220.

Dans une variante, au moins une étape de nettoyage des pièces 1 est effectuée entre deux cycles d'usinage des pièces dures 1.

Dans un mode d'exécution, l'étape E d'usinage comprend au moins la réalisation d'une ouverture 1c dans au moins une de ladite pluralité de pièces dures 1.

Le matériau de ladite pièce dure 1 est, dans un mode de réalisation de l'invention, choisi parmi : Al₂O₃, Saphir, SiO₂, Céramique, Carbure de Silicium, Silicium (Si), Verre, Verre de quartz, Diamant, Nitrure de Silicium, Verre de quartz (Fused Silica), Métal dur.

Le métal dur peut être choisi parmi : le titane, l'acier inox, le tungstène, le tantale.

La céramique peut être par exemple faite en ZrO₂.

Il est compris que lesdites pièces dures peuvent être des pièces composites et peuvent comprendre au moins deux matériaux.

La méthode est préférablement utilisée pour des pièces faites en corindon (Al₂O₃) ou ses dérivés comme le saphir.

Dans un mode de réalisation de l'invention, les matériaux des pièces dures 1 ont une dureté sur l'échelle Vickers entre 1600-2000HV.

Les supports 100 peuvent être de toutes les formes, typiquement rectangulaires, carrées ou circulaires. Le support peut être une plaquette, appelé couramment wafer en anglais, en matériau semiconducteur, en alliage métallique, en matériau céramique ou autre matériau. De façon préférentielle, le support 100 est une plaquette transparente en verre, par exemple faite en verre borosilicate. En utilisant des supports percés avec des ouvertures prévues à chaque position destinée à positionner une pièce dure 1, on permet de faciliter l'usinage des pièces ainsi que de les libérer. Effectivement, lors de l'usinage des pièces, illustré en Figure 1b (étape E) le fait d'avoir une ouverture sous chaque pièce dure permet de facilement traverser le film adhérent 120 qui sera percé, formant une ouverture 120a, et le matériau de la pièce dure 1 ainsi que celui du film adhérent 120 est évacué à travers l'ouverture 100a du support 100 qui se trouve sous la pièce dure 1. Cette évacuation peut se faire par aspiration ou par un système de pressurisation.

Préférablement, l'étape B de fixation de pièces dures 1 est mise en œuvre par un procédé choisi parmi le collage temporaire, l'utilisation de forces de friction, de l'aspiration, réalisation d'un vide, forces électrostatiques, forces de surface, outillages mécaniques, gels.

Dans des variantes d'exécution, les pièces dures 1 peuvent être arrangées et fixées temporairement sur une couche 120 au moins partiellement adhérente, préférablement une couche adhérente double face.

Dans des variantes, les pièces peuvent être arrangées et fixées temporairement sur une couche semi-adhérente ou adhérente telle qu'une bande à collage double face, par exemple un film en polymère 120, qui est fixée sur ledit support 100. Certains types de films adhérents utilisés en microtechnique permettent d'assurer une force d'adhérence sans devoir utiliser des colles. Ces films sont couramment appelés « blue tapes » et connus par l'homme du métier en microtechnique.

Certains supports permettent d'assurer une force d'adhérence par un autre mécanisme par exemple :
- des effets et forces magnétiques ;
- des effets et forces électrostatiques ;
- aspiration ;
- forces de friction ;
- pression de gaz ;
- tenue par congélation d'un film d'eau

Toutefois, il est possible de fixer temporairement les pièces avec des colles temporaires solubles à l'eau ou dans différents solvants. Dans des variantes on peut aussi appliquer des colles temporaires qui changent d'état par traitement thermique ou par rayonnement ultraviolet (UV) ou par rayonnement infrarouge (IR).

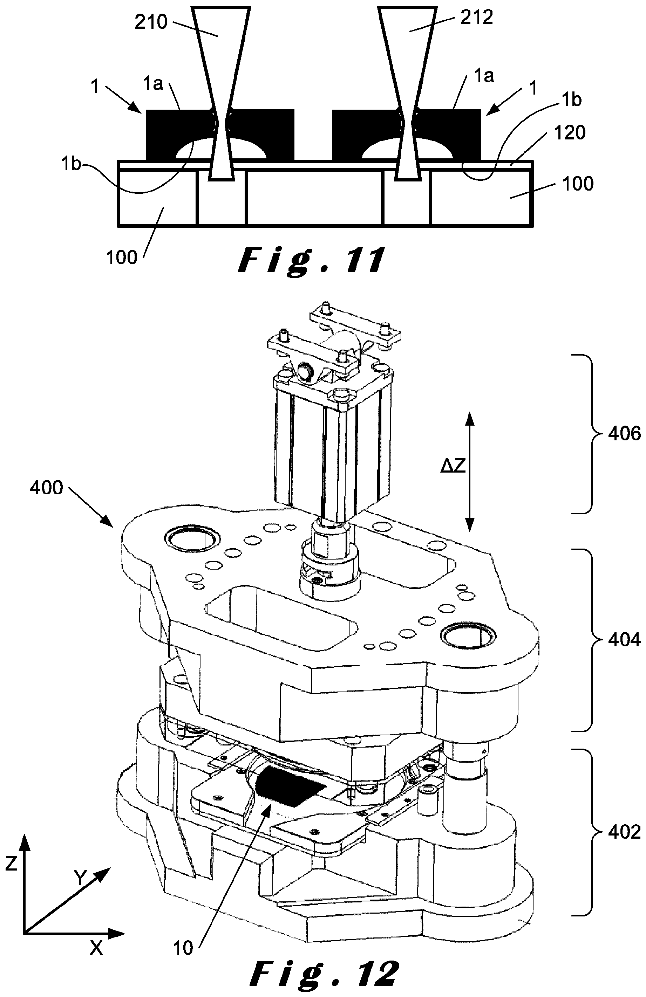

Avantageusement, les pièces dures 1 peuvent être placées sur les supports 100 par un système de placement 400 de pièces dures 1 tel qu'illustré dans les Figures 10, 11,12. Dans un tel système de placement 400 les pièces dures 1 sont d'abord placées sur un tremier 222, illustré en détail dans la Figure 12. Ceci se fait avec une précision typique de ±20 µm. Les pièces dures 1 sont ensuite aspirées par un préhenseur 404, illustré en détail en Figure 11. Après que le tremier 222 ait été écarté, de préférence par glissement ou rotation latéral, un support 100 est mis à la place du tremier 222. Ensuite, un système de pression 406 presse le préhenseur 404 contre le support 100, de préférence contre une couche adhésive 120 fixée sur le support 100.

Avantageusement, le système laser 200 utilise une optique délivrant plus qu'un faisceau laser 210, 212, typiquement 2, 4, 9, 16 ou plus de faisceaux. Ceci permet l'usinage simultané de plusieurs pièces dures 1 en même temps. La Figure 9 illustre l'usinage d'une paire de pièces dures 1 simultanément par deux faisceaux laser 210, 212.

La société Pulsar Photonics par exemple, dont référence est trouvée sous le site internet https://www.pulsar-photonics.de/, offre une solution d'un multi beamscanner pour le traitement multifaisceaux laser. Un tel système comprend au moins un balayeur de faisceau basé sur un système galvano. Une division de faisceau sélectionnable avec un module multifaisceau génère un arrangement de faisceau fixe dans le plan de travail du système de balayage.

Cette approche permet de multiplier la vitesse du processus dans la production de structures périodiques.

Grâce à un séparateur de faisceau diffractif, la puissance du système laser peut être divisée en jusqu'à 100 faisceaux partiels et plus. Des distributions typiques des faisceaux peuvent être, sans limitation: 2×2, 4×4, 8 x8, où n x m ou n et m sont des nombres différents. Il est compris que les faisceaux lasers peuvent être différents, par exemple ils peuvent avoir une focale différente.

Avec un élément optique adapté, il est possible de créer presque n'importe quel arrangement, assurant une grande homogénéité et une efficacité globale élevée.

En combinant un système multifaisceaux avec au moins un scanner galvanométrique, il est possible de générer un grand nombre de points de traitement dans le plan de traitement, qui sont déplacés simultanément sur la pièce dure 1 par ledit scanner.

L'utilisation d'un système multifaisceaux permet de réaliser une production parallèle efficace de structures identiques en une seule étape.

Il est ainsi possible de surmonter les limitations de puissance, essentiellement d'origine physique, de nombreux procédés "ultra short pulse" et d'augmenter ainsi considérablement l'efficacité des procédés.

Les domaines d'application sont le perçage laser, le traitement parallèle de plusieurs composants ou la parallélisation générale des processus laser.

La libération des pièces dures 1, fixées par une couche adhérente 120 au support 100 peut se faire de diverses manières, par exemple par des solvants ou via traitement thermique ou exposition UV. Une exposition à des radiations peut, par exemple, provoquer la libération de gaz aux interfaces de collage. La libération peut aussi se faire par exposition à de la chaleur ou des flashes de radiations infrarouges. Ladite radiation UV et/ou infrarouge peut être réalisée par des sources de puissances pulsés.

Dans des variantes, l'étape E de libération des pièces peut se faire de diverses manières :
- par application de vibration et/ou de chocs ;
- par raclage mécanique ;
- par l'utilisation d'un bras ou robot de « pick and place » ;
- par voie liquide et/ou ultrasonique ;
- par soufflage par de l'air ou autre gaz.

De préférence, le faisceau laser 210 émet dans l'infrarouge avec une longueur d'onde comprise entre 800 nm et 1100 nm, idéalement 1030 nm, ou dans le vert avec une longueur d'onde comprise entre 500 nm et 540 nm idéalement 515 nm, ou dans le bleu avec une longueur d'onde comprise entre 400 nm et 480 nm ou dans l'ultraviolet avec une longueur d'onde inférieure à 400 nm idéalement 343 nm.

Avantageusement le laser 204 est un laser femtoseconde qui peut être un laser émettant un faisceau UV, vert ou infrarouge. Un laser femtoseconde UV à 343 nm et un laser femtoseconde vert à 515 nm peut atteindre, sur des pièces dures par exemple faites en Al₂O₃, une rugosité de moins que 50 nm. Dans le cas d'un laser IR émettant un faisceau d'une longueur d'onde de 1030nm, une rugosité typique est de100 nm ou meilleure.

L'usinage par laser femtoseconde permet des précisions d'usinage très précises, typiquement plus petites que ±1 µm. Les rugosités de surface en mode découpe peuvent atteindre des rugosités de 50nm ou inférieure.

Il est compris également que l'équipement d'usinage 1000 peut être adapté pour réaliser un premier cycle d'usinage et que les pièces dures 1 soient finies par un autre procédé comme un procédé mécanique ou chimique ou par plasma (DRIE). Par exemple, des pièces dures 1 percées peuvent être traitées à l'intérieur ou en dehors de la machine d'usinage 200 afin de les nettoyer ou pour un traitement de lissage par plasma exécuté sur toutes les pièces sur un support 100, préférablement une plaquette en silicium. Il est compris également que dans un mode de réalisation la machine d'usinage 200 peut comprendre des moyens pour déposer un revêtement (coating) sur les pièces avant ou après leur usinage.

Dans un mode de réalisation la machine est adaptée pour usiner au moins 5000 pièces en moins de 10000 secondes.

Dans un mode de réalisation avantageux, toutes les pièces 1 peuvent subir une première étape d'usinage qui peut être une étape de préparation de la surface exécutée par ledit laser à impulsion femtosecondes. Dans une variante, l'ensemble 10 des pièces 1 peut subir une étape de nettoyage et/ou dépôt d'une couche.

Déposer une couche avant usinage par le laser femtoseconde permet de mieux délimiter la zone d'usinage. Cette couche peut être enlevée après le procédé d'usinage.

Il est compris que les conditions d'usinage peuvent être adaptées selon l'emplacement (c.à.d. tiroir) d'un système de casette de la machine de l'invention. Ainsi, un premier tiroir peut comprendre un support avec des pièces dans lesquelles il faut usiner un trou et un autre tiroir peut comprendre un autre wafer avec des pièces dont la surface doit être corrigée ou sur laquelle une forme prédéterminée doit être exécutée.

Dans un mode de réalisation, le support dans un tiroir d'un système à cassettes 220 peut subir plusieurs cycles d'usinage. Par exemple, lors d'un premier cycle toutes les pièces sont usinées pour présenter un trou et lors d'un deuxième chargement des wafers dans la machine, tous les wafers peuvent être repassés dans la machine afin d'agrandir le trou et/ou usiner un bord des pièces.

Dans un mode de réalisation, lors d'au moins un deuxième cycle d'usinage, au moins un autre type de laser peut être utilisé. Ce laser peut être un deuxième et un autre laser femtoseconde.

Selon l'application il est compris que les pièces 10 ne doivent pas forcément être agencées d'une manière homogène sur leur support 100. Par exemple, les pièces dures 1 peuvent être agencées selon un arrangement en forme de disque ou rectangle.

Dans un mode de réalisation les pièces peuvent être fixées des deux côtés d'un support, par exemple par collage temporaire. Un agencement double face (pas illustré dans les Figures) permet d'augmenter d'un facteur 2 la vitesse d'usinage par la machine d'usinage de l'invention.

Il est entendu que le système de mesure de position peut être associé à un système de mesure de dimensions et de forme pour chaque pièce. Ce système de mesure peut être adapté afin d'exécuter des mesures de dimension des pièces pendant les opérations d'usinage.

Il est entendu qu'un système de mesure peut être utilisé pour suivre les dimensions des pièces usinées et pour adapter les paramètres d'usinage de la machine laser afin de permettre une production autonome et plus précise.

### Exemple d'application et d'une configuration d'un système d'usinage selon l'invention

L'exemple suivant montre un cas d'application avec des pierres d'horlogerie sur des wafers ayant un diamètre 150 mm. Pour des pierres 1 ayant un diamètre de 0.9 mm, on peut mettre environ 8'800 pierres 1 sur un support 100 qui est préférablement une plaquette et atteindre des cadences d'usinage d'environ 1 seconde, c'est-à-dire entre 8 et 10 fois inférieures à ce que l'on pourrait obtenir avec une approche conventionnelle.

Dans une configuration préférée, l'équipement d'usinage 1000 comprend :
- un système de chargement /déchargement 220 d'au moins 25 supports 100, typiquement un système de chargement 220 d'au moins 25 wafers 100;
- un système de mesure 300 capable de mesurer très précisément la position XYZ de chaque pierre dure 1;
- un système d'usinage 200 comprenant un laser femtoseconde.

Dans l'exemple, 8800 pierres peuvent être alignées sur un seul support 100. Le système de charge et décharge 220 est un système de type « cassette » comprenant une pluralité de tiroirs, chaque tiroir étant adapté pour contenir un seul wafer.

Les différentes opérations peuvent prendre les temps suivants :
- usinage laser par pièce : 0.5 à 0.6 sec ;
- référençage de la table X-Y : 0.3 sec ;
- charge et décharge par wafer 140 : 120 sec ;
- délais pour les mesures : 60 sec.

Ceci indique un temps d'usinage et de mesure de pièce typiquement en dessous de 2 secondes, plus précisément 0.92 sec pour l'exemple décrit.

Dans l'exemple d'exécution le système à casettes 220 comprendra donc au maximum 25x8800 pièces à usiner, donc maximum 220000 pièces.

Le procédé et la machine 200 de l'exemple permettent d'insérer le support 100 sous le laser femtoseconde 204 et d'usiner toutes les pièces dures 1 sur un seul wafer 100. Quand toutes les pièces fixées sur un wafer 100 sont usinées, le wafer 100 est déchargé vers un tiroir de la casette 220 de la machine 200 et on procède à l'usinage des pièces dures 1 fixées sur un deuxième wafer et ainsi de suite.

## Revendications

1. Equipement d'usinage de pièces dures (1) de microtechnique comprenant une machine d'usinage (200) comprenant un système de chargement/déchargement (220) de supports (100) de pièces dures (1) et au moins un système laser comprenant au moins un laser (204) pour usiner lesdites pièces dures (1) et un système de pilotage dudit laser (204), ladite machine (200) définissant un plan horizontal X-Y et un axe vertical Z orthogonal au plan horizontal X-Y, le matériau desdites pièces dures (1) étant choisi parmi des matériaux ayant une dureté sur l'échelle Vickers comprise entre 1600 HV et 2000 HV, ou choisi parmi : Al₂O₃, Saphir, SiO₂, Céramique, Carbure de Silicium, Silicium (Si), ZrO2, Verre, Verre de quartz, Diamant, un métal dur choisi parmi le titane, l'acier inox, le tungstène, le tantale, chaque support (100) comprenant, au moins sur un côté, une surface agencée pour y fixer une pluralité de pièces dures,
chaque support (100) étant agencé pour assurer une force adhérente,
**caractérisé en ce que**
- le laser (204) est un laser femtoseconde,
- l'équipement comprend un dispositif de mesure de la position X-Y-Z de chaque pièce dure (1) d'au moins un ensemble de pièces dures (1) par rapport à un repère de référence et des moyens d'enregistrement desdites positions X-Y-Z agencés pour coopérer avec le système de pilotage du laser (204),
- ledit système de pilotage du laser comprend un système de positionnement dudit laser (204) agencé pour, avant l'usinage de chaque pièce dure (1), déplacer et positionner le laser par rapport à ladite pièce dure (1) à usiner en fonction de la position X-Y-Z enregistrée de ladite pièce dure (1) de manière à pouvoir usiner ladite pièce dure (1).

2. Equipement d'usinage selon la revendication 1, **caractérisé en ce que** la surface adhérente est une surface d'un film adhérent.

3. Equipement d'usinage selon la revendication 1 ou 2, **caractérisé en ce que** le dispositif de mesure de la position comprend un système de vision (206).

4. Equipement d'usinage selon l'une des revendications 1 à 3, **caractérisé en ce que** le repère de référence est au moins une marque et/ou motif d'alignement réalisé sur une surface dudit support (100) de pièces dures (1).

5. Equipement d'usinage selon l'une des revendications 1 à 3, **caractérisé en ce que** le repère de référence est au moins une marque et/ou motif d'alignement réalisé sur un cadre d'un système d'accueil dudit support (100).

6. Equipement d'usinage selon l'une des revendications 1 à 5, **caractérisé en ce que** le système de chargement/déchargement (220) comprend au moins une cassette mobile (220a-i) pour contenir au moins un desdits supports (100).

7. Equipement d'usinage selon l'une des revendications 1 à 6, **caractérisé en ce que** le support est percé avec des ouvertures prévues à chaque position destinée à positionner une pièce dure (1).

8. Procédé d'usinage de pièces dures de microtechnique (1) comprenant les différentes étapes (A-F) consistant à :
A : se munir de l'équipement d'usinage selon l'une des revendications 1 à 7 et se munir d'une pluralité de pièces dures de microtechnique (1) à usiner, le matériau desdites pièces dures étant choisi parmi des matériaux ayant une dureté sur l'échelle Vickers comprise entre 1600 HV et 2000 HV, ou choisi parmi : Al₂O₃, Saphir, SiO₂, Céramique, Carbure de Silicium, Silicium (Si), ZrO2, Verre, Verre de quartz, Diamant, un métal dur choisi parmi le titane, l'acier inox, le tungstène, le tantale,
B : se munir d'au moins un support de pièces (100) et fixer sur ledit support de pièces ladite pluralité desdites pièces dures (1);
C : insérer au moins un des dits support de pièces (100) dans ladite machine à usiner (200);
D : mesurer la position X-Y-Z de chacune desdites pièces dures (1) d'au moins un ensemble de pièces dures (1) fixées sur le support de pièces (100) par rapport audit repère de référence, au moyen dudit dispositif de mesure et enregistrer les positions X-Y-Z mesurées au moyen desdits moyens d'enregistrement ;
E : exécuter des étapes d'usinages préprogrammés desdites pièces dures (1) d'au moins dudit ensemble par ledit au moins un laser (204), ledit laser (204) étant, avant l'usinage de chaque pièce dure (1) dudit ensemble, déplacé et positionné par rapport à ladite pièce dure (1) à usiner en fonction de la position X-Y Z de ladite pièce dure (1) mesurée et enregistrée à l'étape D ;
F: libérer au moins une desdites pièces dures (1) de son support (100).

9. Procédé selon la revendication 8, **caractérisé en ce que** les étapes d'usinages préprogrammés se font à l'aide d'un système 5 axes.

10. Procédé selon la revendication 8 ou 9 **caractérisé en ce que** l'étape D comprend la mesure de la position X-Y-Z des pièces dures (1) sur un système de test (300) agencé pour déterminer au moins la position X-Y des pièces relativement à un repère de référence du support de pièce et le positionnement du support de pièces précisément sur une table de positionnement (208) de la machine à usiner.

11. Procédé selon l'une des revendications 8 à 10, **caractérisé en ce que** la mesure de la position des pièces dures (1), selon l'étape D, comprend les mesures successives de la position des pièces d'au moins 2 ensembles par rapport à un même repère de référence, lesdits ensembles pouvant avoir des pièces dures (1) en commun, lesdites mesures successives pouvant se recouvrir partiellement, et le traitement desdites mesures successives par les moyens de traitement de l'équipement d'usinage pour obtenir un enregistrement reconstituant la position X-Y-Z des pièces dures (1) desdits au moins 2 ensembles réunis, et de préférence de toutes les pièces dures (1) fixées sur ledit support (100).

12. Procédé selon l'une des revendications 8 à 11, **caractérisé en ce que** l'étape D de mesure de la position des pièces dures (1) est réalisée successivement pour toutes les pièces dures (1) juste avant leur usinage.

13. Procédé selon l'une des revendications 8 à 12, **caractérisé en ce que** l'étape B de fixation des pièces dures (1) est réalisée au moyen d'un chargeur de pièces (400) coopérant avec le système de chargement/déchargement (220).

14. Procédé selon l'une des revendications 8 à 13, **caractérisé en ce que** l'étape E d'usinage comprend au moins la réalisation d'un trou (1c) dans au moins une de ladite pluralité de pièces dures (1).

15. Procédé selon l'une des revendications 8 à 14, **caractérisé en ce que** l'étape B de fixation de pièces dures (1) est mise en œuvre par un procédé choisi parmi le collage temporaire, l'utilisation de forces de friction, de l'aspiration, réalisation d'un vide, forces électrostatiques, forces de surface, outillages mécaniques, gels, congélation d'un film d'eau.

## Patentansprüche

1. Ausrüstung zur Bearbeitung von harten Werkstücken (1) der Mikrotechnik, bestehend aus einem Bearbeitungsgerät (200) mit einem Belade-/Entladesystem (220) von Trägern (100) harter Werkstücke (1) und mindestens einem Lasersystem mit mindestens einem Laser (204) zur Bearbeitung der besagten harten Werkstücke (1) und einem System zur Steuerung des besagten Lasers (204), wobei das besagte Gerät (200) eine horizontale Ebene X-Y und eine vertikale Achse Z senkrecht zur horizontalen Ebene X-Y definiert, wobei das Material der besagten harten Werkstücke (1) aus Materialien ausgewählt wird, die eine Härte auf der Vickers-Skala zwischen 1600 HV und 2000 HV haben, oder ausgewählt wird aus: Al₂O₃, Saphir, SiO₂, Keramik, Siliziumkarbid, Silizium (Si), ZrO2, Glas, Quarzglas, Diamant, einem aus Titan, Edelstahl, Wolfram, Tantal ausgewählten Hartmetall,
wobei jeder Träger (100) mindestens auf einer Seite eine Oberfläche umfasst, die ausgelegt ist, um eine Vielzahl von harten Werkstücken daran zu befestigen,
wobei jeder Träger (100) ausgelegt ist, um eine Haftfestigkeit zu gewährleisten,
**dadurch gekennzeichnet, dass**
- der Laser (204) ein Femtosekundenlaser ist,
- die Ausrüstung eine Vorrichtung zum Messen der X-Y-Z-Position jedes harten Werkstücks (1) von mindestens einem Satz harter Werkstücke (1) bezogen auf eine Referenzmarke und Mittel zum Aufzeichnen der besagten X-Y-Z-Positionen umfasst, die ausgelegt sind, um mit dem System zur Steuerung des Lasers (204) zusammenzuwirken,
- das besagte System zur Steuerung des Lasers ein System zum Positionieren des besagten Lasers (204) umfasst, das ausgelegt ist, um vor der Bearbeitung jedes harten Werkstücks (1) den Laser in Bezug auf das besagte zu bearbeitende harte Werkstück (1) entsprechend der für das besagte harte Werkstück (1) aufgezeichneten X-Y-Z-Position zu verlagern und zu positionieren, um das besagte harte Werkstück (1) bearbeiten zu können.

2. Ausrüstung zur Bearbeitung nach Anspruch 1, **dadurch gekennzeichnet, dass** die haftende Oberfläche eine Oberfläche mit einer Haftfolie ist.

3. Ausrüstung zur Bearbeitung nach Anspruch 1 oder 2, **dadurch gekennzeichnet, dass** die Vorrichtung zum Messen der Position ein Sichtsystem (206) umfasst.

4. Ausrüstung zur Bearbeitung nach einem der Ansprüche 1 bis 3, **dadurch gekennzeichnet, dass** die Referenzmarke mindestens eine Markierung und/oder ein Ausrichtungsmuster ist, die bzw. das auf einer Oberfläche des besagten Trägers (100) harter Werkstücke (1) ausgeführt ist.

5. Ausrüstung zur Bearbeitung nach einem der Ansprüche 1 bis 3, **dadurch gekennzeichnet, dass** die Referenzmarke mindestens eine Markierung und/oder ein Ausrichtungsmuster ist, die bzw. das auf einem Rahmen eines Aufnahmesystems des besagten Trägers (100) ausgeführt ist.

6. Ausrüstung zur Bearbeitung nach einem der Ansprüche 1 bis 5, **dadurch gekennzeichnet, dass** das Belade-/Entladesystem (220) mindestens eine bewegliche Kassette (220a-i) umfasst, um mindestens einen der besagten Träger (100) zu enthalten.

7. Ausrüstung zur Bearbeitung nach einem der Ansprüche 1 bis 6, **dadurch gekennzeichnet, dass** der Träger mit Öffnungen durchbohrt ist, die an jeder Stelle, die zum Positionieren eines harten Werkstücks (1) bestimmt ist, vorgesehen sind.

8. Verfahren zur Bearbeitung von harten Werkstücken der Mikrotechnik (1), das die folgenden verschiedenen Schritte (A-F) umfasst:
A: Beschaffung der Ausrüstung zur Bearbeitung nach einem der Ansprüche 1 bis 7 und Beschaffung einer Vielzahl von zu bearbeitenden harten Werkstücken der Mikrotechnik (1), wobei das Material der besagten harten Werkstücke aus Materialien ausgewählt wird, die eine Härte auf der Vickers-Skala zwischen 1600 HV und 2000 HV haben, oder ausgewählt wird aus: Al₂O₃, Saphir, SiO₂, Keramik, Siliziumkarbid, Silizium (Si), ZrO2, Glas, Quarzglas, Diamant, einem aus Titan, Edelstahl, Wolfram, Tantal ausgewählten Hartmetall;
B: Beschaffung von mindestens einem Träger von Werkstücken (100) und Befestigen der besagten Vielzahl der besagten harten Werkstücke (1) auf dem besagten Träger von Werkstücken;
C: Einsetzen von mindestens einem der besagten Träger von Werkstücken (100) in das besagte Bearbeitungsgerät (200);
D: Messen der X-Y-Z-Position jedes der besagten harten Werkstücke (1) von mindestens einem Satz harter Werkstücke (1), die auf dem Träger von Werkstücken (100) befestigt sind, bezogen auf die besagte Referenzmarke mittels der besagten Messvorrichtung, und Aufzeichnen der mit den besagten Aufzeichnungsmitteln gemessenen X-Y-Z-Positionen;
E: Durchführen von vorprogrammierten Schritten zur Bearbeitung der besagten harten Werkstücke (1) mindestens des besagten Satzes durch den besagten mindestens einen Laser (204), wobei der besagte Laser (204), vor der Bearbeitung jedes harten Werkstücks (1) des besagten Satzes, in Bezug auf das besagte zu bearbeitende harte Werkstück (1) entsprechend der in Schritt D gemessenen und aufgezeichneten X-Y-Z-Position des besagten harten Werkstücks (1) verlagert und positioniert wird,
F: Lösen von mindestens einem der besagten harten Werkstücke (1) aus seinem Träger (100).

9. Verfahren nach Anspruch 8, **dadurch gekennzeichnet, dass** die vorprogrammierten Schritte zur Bearbeitung mit Hilfe eines Fünf-Achsen-Systems ausgeführt werden.

10. Verfahren nach Anspruch 8 oder 9, **dadurch gekennzeichnet, dass** der Schritt D das Messen der X-Y-Z-Position der harten Werkstücke (1) auf einem Prüfsystem (300), das ausgelegt ist, um mindestens die X-Y-Position der Werkstücke bezogen auf eine Referenzmarke des Werkstückträgers zu bestimmen, und das Positionieren des Werkstückträgers genau auf einem Positioniertisch (208) des Bearbeitungsgeräts umfasst.

11. Verfahren nach einem der Ansprüche 8 bis 10, **dadurch gekennzeichnet, dass** das Messen der Position der harten Werkstücke (1) gemäß Schritt D die aufeinanderfolgenden Messungen der Position der Werkstücke von mindestens zwei Sätzen bezogen auf ein- und dieselbe Referenzmarke, wobei die besagten Sätze gemeinsame harte Werkstücke (1) haben können, wobei die besagten aufeinanderfolgenden Messungen sich teilweise überlappen können, und die Verarbeitung der besagten aufeinanderfolgenden Messungen durch die Verarbeitungsmittel der Ausrüstung zur Bearbeitung umfasst, um eine Aufzeichnung zu erhalten, die die X-Y-Z-Position der harten Werkstücke (1) der besagten mindestens zwei zusammengelegten Sätze und vorzugsweise aller auf dem besagten Träger (100) befestigten harten Werkstücke (1) rekonstruiert.

12. Verfahren nach einem der Ansprüche 8 bis 11, **dadurch gekennzeichnet, dass** der Schritt D zum Messen der Position der harten Werkstücke (1) nacheinander für alle harten Werkstücke (1) unmittelbar vor ihrer Bearbeitung ausgeführt wird.

13. Verfahren nach einem der Ansprüche 8 bis 12, **dadurch gekennzeichnet, dass** der Schritt B zum Befestigen der harten Werkstücke (1) mittels eines mit dem Belade-/Entladesystem (220) zusammenwirkenden Werkstückladers (400) ausgeführt wird.

14. Verfahren nach einem der Ansprüche 8 bis 13, **dadurch gekennzeichnet, dass** der Schritt E zur Bearbeitung mindestens die Herstellung von einem Loch (1c) in mindestens einem der besagten Vielzahl von harten Werkstücken (1) umfasst.

15. Verfahren nach einem der Ansprüche 8 bis 14, **dadurch gekennzeichnet, dass** der Schritt B zum Befestigen der harten Werkstücke (1) durch ein Verfahren umgesetzt wird, das aus temporärem Kleben, der Verwendung von Reibungskräften, dem Saugen, Erzeugen eines Vakuums, elektrostatischen Kräften, Oberflächenkräften, mechanischen Werkzeugen, Gelen, Gefrieren eines Wasserfilms ausgewählt wird.

## Claims

1. An apparatus for machining hard microtechnology workpieces (1), comprising a machining unit (200) comprising a system for loading/unloading (220) support members (100) for hard workpieces (1) and at least one laser system comprising at least one laser (204) for machining said hard workpieces (1) and a system for controlling said laser (204), said unit (200) defining a horizontal plane X-Y and a vertical axis Z orthogonal to the horizontal plane X-Y, the material of said hard workpieces (1) being selected from materials having a hardness on the Vickers scale between 1600 HV and 2000 HV, or selected from: Al₂O₃, Sapphire, SiO₂, Ceramic, Silicon Carbide, Silicon (Si), ZrO2, Glass, Quartz Glass, Diamond, a hard metal selected from titanium, stainless steel, tungsten, or tantalum,
each support member (100) comprising, at least on one side, a surface arranged so that a plurality of hard workpieces can be attached thereto,
each support member (100) being arranged to provide an adherent force,
**characterised in that**
- the laser (204) is a femtosecond laser,
- the apparatus comprises a device for measuring the X-Y-Z position of each hard workpiece (1) of at least one set of hard workpieces (1) with respect to a reference mark and means for recording said X-Y-Z positions, which means are arranged to cooperate with the control system of the laser (204),
- said control system of the laser comprises a system for positioning said laser (204), which system is arranged, before each hard workpiece (1) is machined, to move and position the laser with respect to said hard workpiece (1) depending on the recorded X-Y-Z position of said hard workpiece (1), such that said hard workpiece (1) can be machined.

2. The machining apparatus according to Claim 1, **characterised in that** the adherent surface is a surface of an adherent film.

3. The machining apparatus according to Claim 1 or 2, **characterised in that** the position measuring device comprises a vision system (206).

4. The machining apparatus according to any one of Claims 1 to 3, **characterised in that** the reference mark is at least one alignment mark and/or pattern made on a surface of said support member (100) for hard workpieces (1).

5. The machining apparatus according to any one of Claims 1 to 3, **characterised in that** the reference mark is at least one alignment mark and/or pattern made on a frame of a receiving system of said support member (100).

6. The machining apparatus according to any one of Claims 1 to 5, **characterised in that** the loading/unloading system (220) comprises at least one movable cassette (220a-i) to contain at least one of said support members (100).

7. The machining apparatus according to any one of Claims 1 to 6, **characterised in that** the support member has openings drilled therein, which are provided at each position which is intended to position a hard workpiece (1) .

8. A method for machining hard microtechnology workpieces (1) comprising the different steps (A-F) consisting of:
A: providing the machining apparatus according to any one of Claims 1 to 7 and providing a plurality of hard microtechnology workpieces (1), the material of said hard workpieces being selected from materials having a hardness on the Vickers scale between 1600 HV and 2000 HV, or selected from: Al₂O₃, Sapphire, SiO₂, Ceramic, Silicon Carbide, Silicon (Si), ZrO2, Glass, Quartz Glass, Diamond, a hard metal selected from titanium, stainless steel, tungsten, or tantalum;
B: providing at least one workpiece support member (100) and attaching said plurality of said hard workpieces (1) to said workpiece support member;
C: inserting at least one of said workpiece support members (100) into said machining unit (200);
D: measuring, by means of said measuring device, the X-Y-Z position, with respect to said reference mark, of each of said hard workpieces (1) of at least one set of hard workpieces (1) attached to the workpiece support member (100), and recording the X-Y-Z positions measured by means of said recording means;
E: performing pre-programmed steps of machining said hard workpieces (1) of at least said set by means of said at least one laser (204), said laser (204) being, before each hard workpiece (1) of said set is machined, moved and positioned with respect to said hard workpiece (1) depending on the X-Y-Z position of said hard workpiece (1), which position is measured and recorded in step D,
F: releasing at least one of said hard workpieces (1) from its support member (100).

9. The method according to Claim 8, **characterised in that** the pre-programmed machining steps are done with the aid of a 5-axis system.

10. The method according to Claim 8 or 9, **characterised in that** step D comprises measuring the X-Y-Z position of the hard workpieces (1) on a test system (300) which is arranged to determine at least the X-Y position of the workpieces relative to a reference mark of the workpiece support member and the positioning of the workpiece support member precisely on a positioning table (208) of the machining unit.

11. The method according to any one of Claims 8 to 10, **characterised in that** the measuring of the position of the hard workpieces (1), according to step D, comprises the successive measurements of the position of the workpieces of at least 2 sets with respect to a same reference mark, wherein said sets can have hard workpieces (1) in common, wherein said successive measurements can partially overlap, and the processing of said successive measurements by the processing means of the machining apparatus to obtain a recording reconstituting the X-Y-Z position of the hard workpieces (1) of said at least 2 combined sets, and preferably of all of the hard workpieces (1) attached to said support member (100).

12. The method according to any one of Claims 8 to 11, **characterised in that** step D involving measuring the position of the hard workpieces (1) is carried out successively for all of the hard workpieces (1) just before their machining.

13. The method according to any one of Claims 8 to 12, **characterised in that** step B involving attaching the hard workpieces (1) is carried out by means of a workpiece loader (400) cooperating with the loading/unloading system (220).

14. The method according to any one of Claims 8 to 13, **characterised in that** the machining step E comprises at least making a hole (1c) in at least one of said plurality of hard workpieces (1).

15. The method according to any one of Claims 8 to 14, **characterised in that** step B involving attaching hard workpieces (1) is implemented by a method selected from temporary bonding, the use of friction forces, suction, creation of a vacuum, electrostatic forces, surface forces, mechanical tools, gels, and freezing of a film of water.
